Europäisches Patentamt

European Patent Office

Office européen des brevets

(19)

(11) Veröffentlichungsnummer: **0 108 861**
A2

(12) # EUROPÄISCHE PATENTANMELDUNG

(21) Anmeldenummer: **83106156.9**

(22) Anmeldetag: **23.06.83**

(51) Int. Cl.³: **F 16 L 59/16**

(30) Priorität: **16.11.82 DE 3242322**

(43) Veröffentlichungstag der Anmeldung: **23.05.84**
**Patentblatt 84/21**

(84) Benannte Vertragsstaaten: **BE CH IT LI LU NL SE**

(71) Anmelder: **Felten & Guilleaume Energietechnik GmbH,
Schanzenstrasse 24, D-5000 Köln 80 (DE)**

(72) Erfinder: **Noack, Georg, Dr.-Ing., Eschenweg 9,
D-5060 Bergisch Gladbach 2 (DE)**
Erfinder: **Albrecht, Christhart, Ing. grad.,
Siegfriedstrasse 8, D-5000 Köln 50 (DE)**
Erfinder: **Siegert, Wolfgang, Hagener Strasse 131,
D-5860 Iserlohn (DE)**

(54) **Kraftschlüssiger Abschluss einer flexiblen Fernwärmeleitung.**

(57) Der kraftschlüssige Abschluß einer Fernwärmeleitung mit ringgewelltem Innen- und Außenrohr mit einem Glattrohrstutzen besteht im wesentlichen darin, daß das Außenrohr (2) weiter abgelängt als das Innenrohr (1) ist, an das Innenrohr der Glattrohrstutzen (7) angeschweißt ist und vom Ende des Außenrohres herunter auf den Glattrohrstutzen eine trichterförmige Tülle (9) geführt und an beiden Enden mit dem Rohr bzw. Stutzen verschweißt ist. Der Glattrohrstutzen dient seinerseits zum Anschluß an den Rohrstutzen eines Rohrsystems oder eines Gerätes.

EP 0 108 861 A2

0108861

F1 4668 1 11.11.82

## Kraftschlüssiger Abschluß einer flexiblen Fernwärmeleitung

Die Erfindung betrifft den kraftschlüssigen Abschluß einer
Fernwärmeleitung mit ringgewelltem Innen- und Außenrohr mit
einem Glattrohrstutzen. Dieser dient seinerseits zum Anschluß
an den Glattrohrstutzen eines Rohrsystems, einer Verteilung
oder eines Gerätes. Durch die Wellung von Innen- und Außenrohr
(Medium- bzw. Mantelrohr) ist die Leitung flexibel.

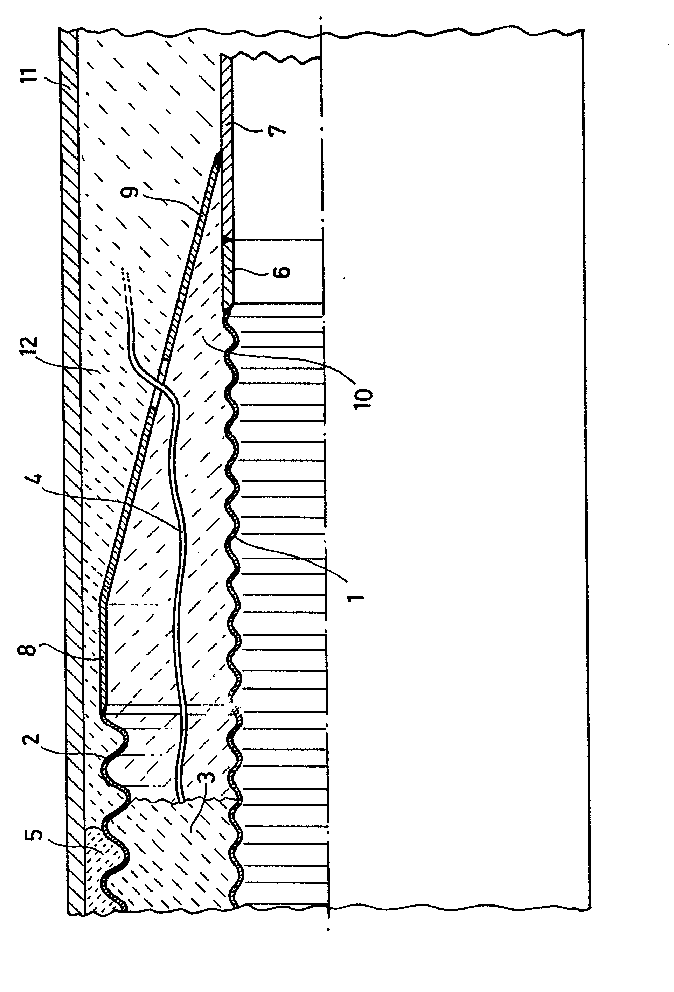

Es ist bekannt, bei einer Fernwärmeleitung mit ringgewellten
Rohren den Abschluß mit einem Glattrohrstutzen dergestalt auszubilden, daß man einen mit zwei Ringwülsten versehenen Glattrohrstutzen mittels einer über den einen Wulst greifenden Kegelflanschschelle am Ende des Innenrohres befestigt und den
Abschluß der Rohrisolierung mittels einer Tülle vornimmt, die
mittels Kegelflanschschellen einerseits im Außenrohr, andererseits auf dem zweiten Wulst des Glattrohrstutzens befestigt
ist (DE-OS 31 12 101, Fig. 3). Dieser Abschluß ist nur mäßig
kraftschlüssig, d.h. er hält nur eine mittlere Zugbelastung
aus.

Um nun einen Abschluß mit hohem Kraftschluß auszubilden, ist
es bei einer Leitung mit spiralgewelltem Innen- und Außenrohr
bekannt, je einen Stützring auf bzw. in das Außenrohr zu
schrauben, dann das Innenrohr in die Bohrung des Innenrings
und hierin wiederum den Anfang des Glattrohrstutzens einzuwalzen (DE-GM 76 28 820). Daraufhin werden stirnseitig Ringe und

Fl 4668                          2                          0108861
                                                            11.11.82

Rohre miteinander verlötet oder verschweißt, und schließlich
wird über den Glattrohrstutzen und die Rohrstirnfläche ein abdeckender und die mechanische Halterung verbessernder, hohlkegelförmiger Ring geschoben und verlötet oder verschweißt. Abschließend kann die gesamte Verbindungsstelle durch einen
Schrumpfschlauch abgedeckt werden. Dieser Abschluß eignet sich
nur für ringgewellte Rohre und ist verhältnismäßig aufwendig.

Daher liegt der Erfindung die Aufgabe zugrunde, einen Abschluß
einer Fernwärmeleitung mit ringgewelltem Außen- und Innenrohr
mit einem Glattrohrstutzen zu schaffen, der einen hohen Kraftschluß hat, aber doch einfach konstruiert und herstellbar ist.
Zudem soll dieser Abschluß einen möglichst geringen Wärmeverlust bewirken.

Die Aufgabe wird erfindungsgemäß dadurch gelöst, daß das Außenrohr weiter abgelängt als das Innenrohr ist, an das Innenrohr
der Glattrohrstutzen angeschweißt ist und vom Ende des Außenrohres herunter auf den Glattrohrstutzen eine trichterförmige
Tülle geführt und an beiden Enden mit dem Rohr bzw. Stutzen
verschweißt ist. Mit dieser Konstruktion erreicht man, daß die
beim Betrieb der Fernwärmeleitung im Abschluß auftretenden
Kräfte gleichmäßig über den Abschluß verteilt werden. Schließlich ist der Raum zwischen Trichter und Innenrohr mit einem
Isolier-Schaumstoff, vorzugsweise aus Polyurethan (PUR) ausgefüllt.

Um Schwierigkeiten bei der Schweißung zwischen Innenrohr und
Rohrstutzen zu vermeiden, die im Material (Edelstahl gegen
Stahl) und Wandstärke (dünn gegen dick) verschieden sind, ist
es nach der weiteren Erfindung vorteilhaft, zwischen Rohr und
Stutzen einen Stützring anzuordnen und zu schweißen, dessen
besondere Ausbildung (an den Enden innen abgerundet und außen
mit zwei Ringwülsten versehen), Material (Edelstahl) und Verbindungstechnik (automatisches Schweißen ohne Materialzugabe)
bereits bekannt sind (DE-GM 81 26 651, Fig. 1).

Fl 4668             3                      0108861
                                                   11.11.82

Der Abschlußtrichter kann als Blechformteil so ausgebildet sein,
daß er am weiten Ende einen Ring zum Anschweißen an das Außenrohr hat. Es kann aber schweißtechnisch vorteilhaft sein, wenn
stattdessen zwischen dem Außenrohr und dem Trichter ebenfalls
ein Stützring angeordnet und geschweißt ist, wobei diese Teile
aus Stahl bestehen.

Der Trichter soll neben dem kraftschlüssigen Abschluß einen
möglichst geringen Wärmeverlust bewirken. Dazu werden nach der
weiteren Erfindung der Winkel zwischen der Innenwand des Trichters und der Außenwand des Rohrstutzens kleiner als 15$^{o}$ und die
Wandstärke des Trichters kleiner als 2 mm gemacht. Diese Ausführung ermöglicht den problemlosen Ausgleich radialer Dehnungsunterschiede, ohne den Kraftschluß der Verbindung zu gefährden.
Zugleich wird die Wärmeleitung von innen nach außen reduziert,
da durch die konische Ausbildung die Wärmeleitstrecke zwischen
Medium- und Mantelrohr über deren radialen Abstand hinaus ausgedehnt ist.

Die Wärmeverluste im Abschluß lassen sich noch weiter reduzieren, wenn die Wand des Abschlußtrichters nicht nur an einer
Stelle für die Durchführung von Feuchtmeldeadern, sondern wenn
sie über die ganze Fläche gelocht ist. Dann werden die beiden
Räume innerhalb und außerhalb des Trichters (einerseits gegen
das Innenrohr, andererseits gegen die den Anschluß umgebende
Muffe) gemeinsam vor Ort mit PUR ausgeschäumt.

Die vorbeschriebene Ausführung des Fernwärme-Leitungsabschlusses in kraftschlüssiger Form hat als Hauptvorteil die erhöhte
Betriebssicherheit, so daß höhere Gewährleistungsverpflichtungen eingegangen werden können. Zudem ist sie einfach konstruiert und herstellbar.

Ein Ausführungsbeispiel der Erfindung ist in der Zeichnung
dargestellt und wird im folgenden näher beschrieben. Dort wird
der Leitungsabschluß im Längsschnitt gezeigt, innen mit einem Stützring zwischen Innenrohr und Rohrstutzen, außen mit einer
den späteren Leitungsanschluß umgebenden Muffe.
Bezeichnet sind mit

 1 Innenrohr (Mediumrohr) aus Edelstahl, ringgewellt
 2 Außenrohr (Mantelrohr) aus Stahl, ringgewellt
 3 PUR-Schaum (Polyurethan-) im Fernwärmerohr
 4 Feuchtmeldeadern
 5 Korrosionsschutz
 6 Innerer Stützring aus Edelstahl
 7 Glattrohrstutzen (Anschluß-) aus Stahl
 8 Ringförmiges Anschweißende des Trichters
 9 Abschlußtrichter aus Stahl
10 PUR-Schaum im Trichter-Innenraum
11 Muffe aus HDPE (Polyäthylen hoher Dichte)
12 PUR-Schaum im Muffen-Innenraum.

Bei diesem Abschluß der flexiblen und trommelbaren Fernwärmeleitung ist das ringgewellte Innenrohr 1 über den Stützring 6
mit dem Glattrohrstutzen 7, und das ringgewellte Außenrohr 2
über den Trichter 9 ebenfalls mit dem Stutzen 7 durch Schweissung verbunden. Der Abschluß der Leitung wird im Werk wie folgt
vorgenommen: Verschweißen von Ring 6 einerseits mit Stutzen 7,
von Ring 6 andererseits mit Innenrohr 1, von Trichterende 8 mit
Außenrohr 2 und von Trichter 9 mit Stutzen 7; schließlich Ausschäumen des Trichter-Innenraumes 10.

Der Anschluß der Leitung wird auf der Baustelle wie folgt vorgenommen: Überschieben der Muffe 11 aus HDPE, Verschweißen des
Stutzens 7 mit dem Glattrohrstutzen eines Rohrsystems einer
Verteilung oder eines Gerätes, Ausschäumen des Muffen-Innenraumes 12 und Aufschrumpfen der Muffenenden.

0108861

F1 4668 1 11.11.82

Ansprüche:

1. Kraftschlüssiger Abschluß einer Fernwärmeleitung mit ringgewelltem Innen- und Außenrohr mit einem Glattrohrstutzen, d a d u r c h   g e k e n n z e i c h n e t, daß das Außenrohr (2) weiter abgelängt als das Innenrohr (1) ist, an das Innenrohr der Glattrohrstutzen (7) angeschweißt ist und vom Ende des Außenrohres herunter auf den Glattrohrstutzen eine trichterförmige Tülle (9) geführt und an beiden Enden mit dem Rohr bzw. Stutzen verschweißt ist, und daß der Raum zwischen Trichter und Innenrohr mit einem Isolier-Schaumstoff (10) ausgefüllt ist.

2. Leitungsabschluß nach Anspruch 1, d a d u r c h   g e k e n n z e i c h n e t, daß zwichen dem Innenrohr (1) und dem Rohrstutzen (7) ein Stützring (6) angeordnet und geschweißt ist, der an den Enden innen abgerundet und außen mit zwei Ringwülsten für das Material der Schweißnaht versehen ist, wobei das Innenrohr sowie der Stützring aus Edelstahl und der Rohrstutzen aus Stahl bestehen.

3. Leitungsabschluß nach Anspruch 2, d a d u r c h   g e k e n n z e i c h n e t, daß zwischen dem Außenrohr (2) und dem Trichter (9) ein Stützring (8) angeordnet und geschweißt ist, wobei diese Teile aus Stahl bestehen.

4. Leitungsabschluß nach einem der Ansprüche 1 bis 3, d a d u r c h   g e k e n n z e i c h n e t, daß der Winkel zwischen der Innenwand des Trichters (9) und der Außenwand des Rohrstutzens (7) kleiner als $15^o$ und die Wandstärke des Trichters kleiner als 2 mm sind.

5. Leitungsabschluß nach Anspruch 4, d a d u r c h   g e - k e n n z e i c h n e t, daß die Wand des Trichters (9) an einer Stelle für die Durchführung von Feuchtmeldeadern (4) gelocht ist.

6. Leitungsabschluß nach Anspruch 4, d a d u r c h   g e - k e n n z e i c h n e t, daß die Wand des Trichters (9) über die ganze Fläche gelocht ist.

Fl 4558

0108861